# EUROPEAN PATENT SPECIFICATION

(11) **EP 4 056 633 B1**
(45) Date of publication and mention of the grant of the patent: **22.01.2025**
(21) Application number: 19951758.2
(22) Date of filing: 19.11.2019
(51) Int. Cl.: C08J 11/16, C08K 7/06, C08L 63/00, C08L 67/06, C08L 79/08, C08L 61/06, B01J 21/06, B01J 27/08, B01J 27/128, B01J 27/138, C10B 49/14, C10B 53/07, C10B 57/06

(54) **CATALYST FOR THERMAL DEGRADATION OF CARBON-FIBER-AND-RESIN-BASED COMPOSITE MATERIAL AND APPLICATION METHOD THEREFOR**
KATALYSATOR FÜR DEN THERMISCHEN ABBAU VON VERBUNDMATERIAL AUF DER BASIS VON KOHLENSTOFFFASERN UND HARZ SOWIE ANWENDUNGSVERFAHREN DAFÜR
CATALYSEUR DE DÉGRADATION THERMIQUE DE MATÉRIAU COMPOSITE À BASE DE FIBRES DE CARBONE ET DE RÉSINE ET PROCÉDÉ D'APPLICATION ASSOCIÉ

(30) Priority: 04.11.2019 CN 201911063662
(43) Date of publication of application: 14.09.2022
(73) Proprietor: Beijing Aeronautical Science & Technology Research Institute,Commercial Aircraft Corporation of China, Beijing 102211 (CN); Boeing (China) Co., Ltd., Beijing 100024 (CN)
(72) Inventor: XIONG, Meirong, Beijing 102211 (CN); JI, Jianying, Beijing 102211 (CN); SUI, Gang, Beijing 102211 (CN); HU, Zhongmin, Beijing 102211 (CN); FISHER, Ken, Beijing 102211 (CN); WU, Tianyu, Beijing 102211 (CN)
(74) Representative: Gille Hrabal Partnerschaftsgesellschaft mbB Patentanwälte
(86) International application number: PCT/CN2019/119390
(87) International publication number: WO 2021/088123

(56) References cited:
- CN-A- 102 115 547
- CN-A- 104 016 851
- CN-A- 106 748 688
- CN-A- 106 807 425
- CN-A- 107 236 580
- CN-A- 109 206 659
- DE-A1- 102017 216 685
- GB-A- 1 147 608
- JP-A- S62 117 822
- WANG H T ET AL: "Ethylene synthesis from the oxidative bromination of ethane", APPLIED CATALYSIS A: GENERAL, ELSEVIER, AMSTERDAM, NL, vol. 364, no. 1-2, 31 July 2009 (2009-07-31), pages 130 - 136, XP026251008, ISSN: 0926-860X, [retrieved on 20090527], DOI: 10.1016/J.APCATA.2009.05.039
- SCHMITZ ANDREW D. ET AL: "Highly Active Methanol Dissociation Catalysts Derived from Supported Molten Salts", ENERGY & FUELS, vol. 8, no. 3, 1 May 1994 (1994-05-01), WASHINGTON, DC, US., pages 729 - 740, XP093110501, ISSN: 0887-0624, DOI: 10.1021/ef00045a030
- LIU XIANGCHUN ET AL: "Preparation and characterization of Zn2TiO4micro/nano crystals by molten salt method", JOURNAL OF MATERIALS SCIENCE: MATERIALS IN ELECTRONICS, CHAPMAN AND HALL, LONDON, GB, vol. 27, no. 12, 5 August 2016 (2016-08-05), pages 13266 - 13270, XP036107210, ISSN: 0957-4522, [retrieved on 20160805], DOI: 10.1007/S10854-016-5474-5

## Description

### TECHNICAL FIELD

The present invention relates to the technical field of recovery of carbon fibers, in particular to a catalyst for thermal degradation of carbon fiber reinforced polymer composites and an application method therefor.

### BACKGROUND

Carbon fiber reinforced polymer composites has excellent properties such as high specific strength, high specific modulus, heat resistance and corrosion resistance, so it is widely used in fields of aviation, aerospace, automobiles, energy, and sports and leisure.

There are problems in the disposal of leftovers produced in the manufacturing stage or wastes of carbon fiber reinforced polymer-based composite materials waste at the end of their service lives. At present, in most cases, carbon fiber reinforced polymer-based composite materials are combusted for heat storage, or cut into powder or particles used as fillers, paving materials, or the like, and are even disposed by means of landfilling. carbon fiber reinforced polymer composites contains high-value carbon fibers, and these disposal methods will undoubtedly cause a huge waste of carbon fiber resources.

In the related art, a variety of methods for decomposing resin in a waste carbon fiber reinforced polymer composites to separate carbon fibers therein, so as to realize recovery of the carbon fibers. These decomposition methods include thermal decomposition, inorganic strong acid decomposition, organic solvent decomposition, sub/supercritical fluid decomposition, and the like.

By the organic solvent decomposition and recovery, clean carbon fibers can be obtained, but a large number of organic solvents are used in the recovery process, which will pollute the environment. An operation process of solvent separation (liquid separation, extraction, distillation, etc.) after use is complicated, resulting in high recovery cost; and this method is selective for the type of resin matrix of the carbon fiber reinforced polymer composites and even the type of a curing agent, so it is not suitable for all types of resin matrix. Due to the low acid resistance of epoxy resin, the epoxy resin can be degraded by strong corrosive acid such as nitric acid, and carbon fibers with clean surfaces can be recovered. However, strong acid such as nitric acid has higher requirements both for reaction equipment and the safety coefficient of operation due to its high corrosiveness, and is difficult to dispose after reaction. Although a supercritical water treatment method has the characteristics of cleanness and zero pollution, it needs to be carried out under high-temperature and high-pressure reaction conditions, and has higher requirements for reaction equipment. These methods are still in the laboratory stage or pilot stage, and true industrialization has not been realized yet.

The most industrially feasible method disclosed in the related art is a method for thermally decomposing the waste carbon fiber reinforced polymer composites. The thermal decomposition methods include a fluidized bed method and a pyrolysis method. The fluidized bed method is to decompose a waste carbon fiber reinforced polymer composites in hot air. However, due to serious oxidizing reaction and violent impact in reactors, separators, and the like, recovered carbon fibers have lots of cuts on their surfaces and have reduced lengths and greatly reduced fiber performance, and the method is complicated in operation. If the traditional pyrolysis method is carried out in an air atmosphere, it will adversely affect the properties of recovered carbon fibers due to a high temperature and long heat treatment time. If the waste carbon fiber reinforced polymer-based composite material is thermally decomposed in an atmosphere with inert gas such as nitrogen and helium, it is easy to form a great number of residual carbons on the surfaces of the recovered carbon fibers, which will seriously affect the subsequent processing and recycling performance of the recovered carbon fibers.

Therefore, it is necessary to study a catalyst for thermal degradation of carbon fiber reinforced polymer composites and apply it in carbon fiber recovery to deal with the deficiencies in the related art, thus solving or alleviating one or more of the above problems.

The publications "Ethylene synthesis from the oxidative bromination of ethane" by Wang H T er al., DOI: 10.1016/J.APCATA.2009.05.039, "Highly Active Methanol Dissociation Catalysts Derived from Supported Molten Salts" by Schmitz Andrew D. et al., DOI: 10.1021/ef00045a030, "Preparation and characterization of Zn2TiO4 micro/nano crystals by molten salt method" by Lui Xiangchun et al., DOI: 10.1007/S10854-016-5474-5, GB 1 147 608 A and CN 107 236 580 B relate to ternary catalysts. WO 2018 / 183 847 A1, CN 109 206 659 A and CN 102 115 547 B relate to methods for recycling composite material.

### SUMMARY

In view of this, the present invention provides a catalyst for thermal degradation of carbon fiber reinforced polymer composites and an application method therefor. resin matrix can be fully degraded; residual impurities can be removed; the recovery efficiency is high; the cost is low; and the mechanical strength of recovered carbon fibers can also be maintained.

In one example, a catalyst for thermal degradation of carbon fiber reinforced polymer composites comprises a first component, a second component and a third component.

The first component is potassium chloride or sodium chloride; the second component is zinc chloride or ferric chloride; and the third component is titanium dioxide or silicon oxide.

A mass ratio of the first component, the second component and the third component is 1: (0.5-2): (0.5-2).

The present invention provides a method for using any one of the above catalysts to catalyze degradation of carbon fiber reinforced polymer composites. The method includes the steps of:
S1, placing the catalyst in a pyrolysis furnace at a temperature maintained at 300°C to 500°C;
S2, cutting and placing the carbon fiber reinforced polymer composites into the pyrolysis furnace for reaction carried out for 10 to 30 min at a temperature maintained at 300°C to 500°C; and
S3, taking out a product, and ultrasonically washing the product with water to obtain recovered carbon fibers.

According to the aspect mentioned above and any one of possible implementation s, an implementation is further provided. According to the standard ASTM-D3379, the monofilament tensile strength of the recovered carbon fibers is 4.45 GPa or above, and the strength retention rate is 90.8% or above.

According to the aspect mentioned above and any one of possible implementations, an implementation is further provided. The area of the cut carbon fiber reinforced polymer composites is 15-25 cm².

According to the aspect mentioned above and any one of possible implementation s, an implementation is further provided. The thickness of the carbon fiber reinforced polymer composites in S2 is 2-3 mm.

According to the aspect mentioned above and any one of possible implementation s, an implementation is further provided. resin matrix in the carbon fiber reinforced polymer composites is thermoset resin, which is specifically one or more of epoxy resin, bismaleimide resin, unsaturated polyester, and phenolic resin.

According to the aspect mentioned above and any one of possible implementation s, an implementation is further provided. The carbon fibers in the carbon fiber reinforced polymer composites are polyacrylonitrile (PAN)-based carbon fibers or asphalt-based carbon fibers.

According to the aspect mentioned above and any one of possible implementation s, an implementation is further provided. The form of the carbon fibers in the carbon fiber reinforced polymer composites is any one or more of continuous fiber, chopped fiber, powder fiber, and fabric.

Further disclosed is a method for recovering carbon fibers in a waste carbon fiber reinforced polymer composites. At a temperature of 300°C to 500°C, any one of the catalysts above-mentioned for thermal degradation is used to degrade the carbon fiber reinforced polymer composites and obtain the carbon fibers.

Compared with the related art, the present invention can achieve the following technical effects: a catalyst formula is innovatively provided; due to the existence of the catalyst, the degradation of the resin matrix in the waste carbon fiber reinforced polymer composites can be catalyzed, and the residual carbons on the surfaces of the carbon fibers in the degradation process can be removed, so that the resin matrix can be fully degraded, and residual impurities are cleared away. The method is a molten-salt growth method for catalytic recovery of carbon fibers, which has short recovery time, high efficiency and low cost. The mechanical strength of the recovered carbon fibers is also maintained, and a support is provided for the circular economy of the carbon fiber reinforced polymer composites.

Of course, it is not necessary for any product implementing the present invention to achieve all of the above advantages simultaneously.

### BRIEF DESCRIPTION OF THE DRAWINGS

In order to explain the technical solutions of the embodiments of the present invention more clearly, the following will briefly introduce the accompanying drawings used in the embodiments. Apparently, the drawings in the following description are only some embodiments of the present invention. Those of ordinary skill in the art can obtain other drawings based on these drawings without creative work.
Fig. 1 illustrates schematic diagrams of carbon fibers before and after catalytic degradation by a thermal degradation catalysis method provided by one embodiment of the present invention;
Fig. 2 illustrates Scanning Electron Microscopy (SEM) pictures of carbon fibers heated at 500°C for 5 min with and without TiO₂ in a thermal degradation catalysis method provided by one embodiment of the present invention;
Fig. 3 illustrates SEM pictures of carbon fibers heated at 500°C for 10 min with and without TiO₂ in a thermal degradation catalysis method provided by one embodiment of the present invention; and
Fig. 4 illustrates SEM pictures of carbon fibers heated at 500°C for 20 min with and without TiO₂ in a thermal degradation catalysis method provided by one embodiment of the present invention.

### DETAILED DESCRIPTION

In order to better understand the technical solutions of the present invention, the embodiments of the present invention are described in detail below in combination with accompanying drawings.

It should be clear that the described embodiments are only a part of the embodiments of the present invention, rather than all of the embodiments. Based on embodiments of the present invention, all other embodiments obtained by those of ordinary skill in the art without creative work shall fall within the scope of protection of the present invention.

The terms used in the embodiments of the present invention are only for the purpose of describing the specific embodiments, and are not intended to limit the present invention. The singular forms of "a", "said", and "the" used in the embodiments of the present invention and the claims are also intended to include plural forms, unless the context clearly indicates other meanings.

Aiming at the problems of high temperature, long disposal time, and serious damage to the performance of carbon fibers of a traditional pyrolysis method, the present invention provides a method for recovering carbon fibers in a waste carbon fiber reinforced polymer-based composite material by catalytic thermal degradation. The method is a molten-salt growth method for catalytic recovery of carbon fibers, which catalyzes degradation of resin matrix in the carbon fiber reinforced polymer-based composite material and removes residual carbons from surfaces of the carbon fibers in the degradation process. A catalyst formula is innovatively provided. Due to the existence of the catalyst, the resin matrix can be fully degraded, and residual impurities are cleared away.

A method for recovering carbon fibers in a waste carbon fiber reinforced polymer-based composite material by catalytic thermal degradation of the present invention specifically includes the following steps:
1. A catalyst, such as a mixture of potassium chloride, zinc chloride, and titanium dioxide, is mixed in a crucible according to a certain mass ratio, and the crucible is then placed in a pyrolysis furnace at a temperature maintained at 300°C to 500°C, so that the catalyst is in a molten state.
2. Carbon fiber reinforced polymer composites with a thickness of 2-3 mm is cut into a size of 15-25 cm², and is then put into the crucible in the pyrolysis furnace for thermal reaction carried out for 10 to 30 min at a temperature maintained at 300°C to 500°C.
3. A product is taken out and ultrasonically washed with water.

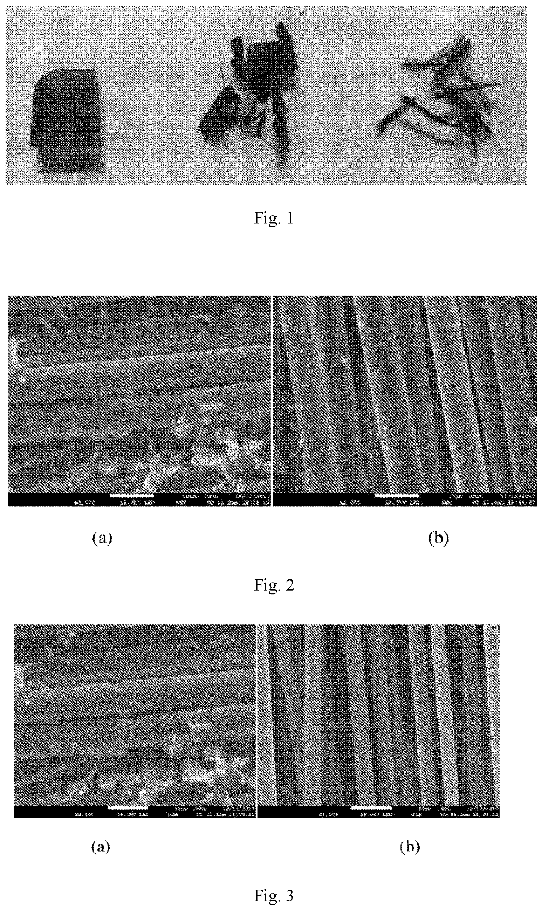

Schematic diagrams of carbon fibers before and after catalytic degradation of carbon fiber reinforced polymer composites by a thermal degradation catalysis method of the present invention are as shown in Fig. 1. Fig. 1 shows a process of degrading a carbon fiber composite material laminated board, including a non-degraded state, a semi-degraded state, and a fully degraded state sequentially from left to right.

According to the standard ASTM-D3379, the carbon fibers are subjected to a monofilament tensile test, and it is tested that the monofilament tensile strength of the recovered carbon fibers is 4.50 GPa, and the strength retention rate is 90.8% or above.
resin matrix in a waste carbon fiber reinforced polymer composites is thermoset resin, which is one or more of epoxy resin, bismaleimide resin, unsaturated polyester or phenolic resin; carbon fibers in the carbon fiber reinforced polymer composites are PAN-based carbon fibers or alphalt-based carbon fibers; and the form of the carbon fibers in the carbon fiber reinforced polymer composites is any one or more of continuous fiber, chopped fiber, powder fiber, and fabric.

The catalyst contains three components: the first component is potassium chloride or sodium chloride; the second component is zinc chloride or ferric chloride; and the third component is titanium dioxide or silicon oxide. A mass ratio of the potassium chloride (or sodium chloride), the zinc chloride (or ferric chloride), and titanium dioxide (or silicon oxide) is 1: (0.5-2): (0.5-2), that is, the mass ratios of the first component to the second component and the first component to the third component are all 1: (0.5-2).

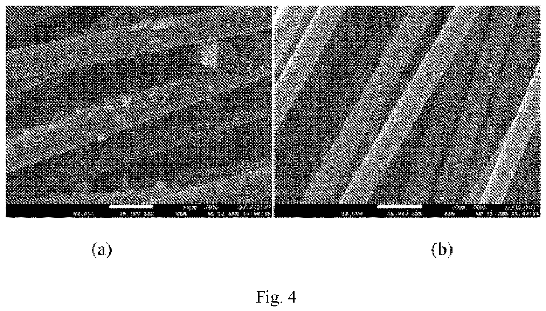

The carbon fibers after pyrolysis using a catalyst with KCl/ZnCl₂ are heated at 500°C respectively with and without TiO₂, and SEM pictures of obtained carbon fiber samples are shown in Figs. 2-4. Fig. 2(a) illustrates an SEM picture of heating for 5 min without TiO₂. Fig. 2(b) illustrates an SEM picture of heating for 5 min with TiO₂. Fig. 3(a) illustrates an SEM picture of heating for 10 min without TiO₂. Fig. 3(b) illustrates an SEM picture of heating for 10 min with TiO₂. Fig. 4(a) illustrates an SEM picture of heating for 20 min without TiO₂. Fig. 4(b) illustrates an SEM picture of heating for 20 min with TiO₂. By comparison, it can be seen that TiO₂ has an extremely good effect on the recovery of the carbon fibers, and the integrity and strength of the carbon fibers are higher than those recovered without TiO₂. As the heating time goes, TiO₂ also has a good effect on the recovery of the carbon fibers.

### Embodiment 1

Carbon fibers in a selected waste carbon fiber reinforced polymer composites are Toray T700, with monofilament tensile strength of 4.90 GPa; resin matrix is 4,4'-diaminodiphenylmethane epoxy resin; a curing agent is diamino diphenyl sulfone (DDS); the carbon fibers are PAN-based carbon fibers; the form of the carbon fibers is continuous fiber; and the content of the carbon fibers is 60% by weight.

This embodiment provides a method for recovering carbon fibers in a waste carbon fiber reinforced polymer composites. The method specifically includes the following steps:
1. Potassium chloride, zinc chloride, and titanium dioxide were mixed in a crucible according to a mass ratio of 1:1:1, and the crucible was then placed in a pyrolysis furnace at a temperature maintained at 300°C, so that the catalyst was in a molten state.
2. Carbon fiber reinforced polymer composites with a thickness of 2 mm was cut into a size of 25 cm², and was then put into the crucible in the pyrolysis furnace for thermal reaction at 300°C for 30 min.
3. A product was taken out and ultrasonically washed with water.

According to the standard ASTM-D3379, the carbon fibers were subjected to a monofilament tensile test, and it was tested that the monofilament tensile strength was 4.50 GPa, and the strength retention rate was 91.8%.

### Embodiment 2

Carbon fibers in a selected waste carbon fiber reinforced polymer composites are Toray T700, with monofilament tensile strength of 4.90 GPa; resin matrix is 4,4'-diaminodiphenylmethane epoxy resin; a curing agent is DDS; the carbon fibers are PAN-based carbon fibers; the form of the carbon fibers is continuous fiber; and the content of the carbon fibers is 60% by weight.

This embodiment provides a method for recovering carbon fibers in a waste carbon fiber reinforced polymer composites. The method specifically includes the following steps:
1. Potassium chloride, ferric chloride, and titanium dioxide were mixed in a crucible according to a mass ratio of 1:0.5:0.5, and the crucible was then placed in a pyrolysis furnace at a temperature maintained at 500°C, so that the catalyst was in a molten state.
2. Carbon fiber reinforced polymer composites with a thickness of 2 mm was cut into a size of 20 cm², and was then put into the crucible in the pyrolysis furnace for thermal reaction at 500°C for 10 min.
3. A product was taken out and ultrasonically washed with water.

According to the standard ASTM-D3379, the carbon fibers were subjected to a monofilament tensile test, and it was tested that the monofilament tensile strength was 4.55 GPa, and the strength retention rate was 92.9%.

### Embodiment 3

Carbon fibers in a selected waste carbon fiber reinforced polymer composites are Toray T700, with monofilament tensile strength of 4.90 GPa; resin matrix is 4,4'-diaminodiphenylmethane epoxy resin; a curing agent is DDS; the carbon fibers are PAN-based carbon fibers; the form of the carbon fibers is chopped fiber; and the content of the carbon fibers is 60% by weight.

This embodiment provides a method for recovering carbon fibers in a waste carbon fiber reinforced polymer composites. The method specifically includes the following steps:
1. Sodium chloride, zinc chloride, and titanium dioxide were mixed in a crucible according to a mass ratio of 1:2:2, and the crucible was then placed in a pyrolysis furnace at a temperature maintained at 350°C, so that the catalyst was in a molten state.
2. Carbon fiber reinforced polymer composites with a thickness of 2.5 mm was cut into a size of 15 cm², and was then put into the crucible in the pyrolysis furnace for thermal reaction at 350°C for 30min.
3. A product was taken out and ultrasonically washed with water.

According to the standard ASTM-D3379, the carbon fibers were subjected to a monofilament tensile test, and it was tested that the monofilament tensile strength was 4.47 GPa, and the strength retention rate was 91.2%.

### Embodiment 4

Carbon fibers in a selected waste carbon fiber reinforced polymer composites is Toray T700, with monofilament tensile strength of 4.90 GPa; resin matrix is 4,4'-diaminodiphenylmethane epoxy resin; a curing agent is DDS; the carbon fibers are asphalt-based carbon fibers; the form of the carbon fibers is powder fiber; and the content of the carbon fibers is 60% by weight.

This embodiment provides a method for recovering carbon fibers in a waste carbon fiber reinforced polymer composites. The method specifically includes the following steps:
1. Potassium chloride, zinc chloride, and silicon oxide were mixed in a crucible according to a mass ratio of 1:2:2, and the crucible was then placed in a pyrolysis furnace at a temperature maintained at 350°C, so that the catalyst was in a molten state.
2. Carbon fiber reinforced polymer composites with a thickness of 2.5 mm was cut into a size of 15 cm², and was then put into the crucible in the pyrolysis furnace for thermal reaction at 350°C for 30min.
3. A product was taken out and ultrasonically washed with water.

According to the standard ASTM-D3379, the carbon fibers were subjected to a monofilament tensile test, and it was tested that the monofilament tensile strength was 4.47 GPa, and the strength retention rate was 91.2%.

### Embodiment 5

Carbon fibers in a selected waste carbon fiber reinforced polymer composites are Toray T800, with monofilament tensile strength of 5.49 GPa; resin matrix is bisphenol-A unsaturated polyester; a curing agent is methyl ethyl ketone peroxide; the carbon fibers are PAN-based carbon fibers; the form of the carbon fibers is fabric; and the content of the carbon fibers is 60% by weight.

This embodiment provides a method for recovering carbon fibers in a waste carbon fiber reinforced polymer composites. The method specifically includes the following steps:
1. Potassium chloride, zinc chloride, and silicon oxide were mixed in a crucible according to a mass ratio of 1:1.2:1.5, and the crucible was then placed in a pyrolysis furnace at a temperature maintained at 450°C, so that the catalyst was in a molten state.
2. Carbon fiber reinforced polymer composites with a thickness of 2.5 mm was cut into a size of 25 cm², and was then put into the crucible in the pyrolysis furnace for thermal reaction at 450°C for 30 min.
3. A product was taken out and ultrasonically washed with water.

According to the standard ASTM-D3379, the carbon fibers were subjected to a monofilament tensile test, and it was tested that the monofilament tensile strength was 5.21 GPa, and the strength retention rate was 94.9%.

### Embodiment 6

Carbon fibers in a selected waste carbon fiber reinforced polymer composites are Toray T700, with monofilament tensile strength of 4.90 GPa; resin matrix is bismaleimide resin; the carbon fibers are PAN-based carbon fibers; the form of the carbon fibers is continuous fiber; and the content of the carbon fibers is 60% by weight.

This embodiment provides a method for recovering carbon fibers in a waste carbon fiber reinforced polymer composites. The method specifically includes the following steps:
1. Sodium chloride, ferric chloride, and silicon oxide were mixed in a crucible according to a mass ratio of 1:1:0.5, and the crucible was then placed in a pyrolysis furnace at a temperature maintained at 450°C, so that the catalyst was in a molten state.
2. Carbon fiber reinforced polymer composites with a thickness of 2.5 mm was cut into a size of 20 cm², and was then put into the crucible in the pyrolysis furnace for thermal reaction at 450°C for 10 min.
3. A product was taken out and ultrasonically washed with water.

According to the standard ASTM-D3379, the carbon fibers were subjected to a monofilament tensile test, and it was tested that the monofilament tensile strength was 4.45 GPa, and the strength retention rate was 90.8%.

### Embodiment 7

Carbon fibers in a selected waste carbon fiber reinforced polymer composites is Toray T700, with monofilament tensile strength of 4.90 GPa; resin matrix is phenolic resin; the carbon fibers are PAN-based carbon fibers; the form of the carbon fibers is chopped fiber; and the content of the carbon fiber is 60% by weight.

This embodiment provides a method for recovering carbon fibers in a waste carbon fiber reinforced polymer composites. The method specifically includes the following steps:
1. Potassium chloride, zinc chloride, and titanium dioxide were mixed in a crucible according to a mass ratio of 1:1.5:1, and the crucible was then placed in a pyrolysis furnace at a temperature maintained at 350°C, so that the catalyst was in a molten state.
2. Carbon fiber reinforced polymer composites with a thickness of 3mm was cut into a size of 25 cm², and was then put into the crucible in the pyrolysis furnace for thermal reaction at 350°C for 30 min.
3. A product was taken out and ultrasonically washed with water.

According to the standard ASTM-D3379, the carbon fibers were subjected to a monofilament tensile test, and it was tested that the monofilament tensile strength was 4.57 GPa, and the strength retention rate was 93.3%.

Compared with the existing carbon fiber recovery technology, this application has a simple operation process which has lower requirements for operating equipment, and it is suitable for industrial scale-up production. A catalyst system used is cheap and readily available, which can accelerate the degradation of the resin matrix and shorten the degradation time, so that the resin matrix is fully degraded. The degradation temperature can be reduced by 100°C to 150°C compared with that in the related art. Furthermore, a swelling effect of the catalyst is used to promote interlayer peeling of the composite material, which solves the problem that the interlayer peeling of a composite material laminated board is difficult, avoids non-uniform performance and quality caused by a difference between the reaction time of outer layer fibers and the reaction time of inner layer fibers, and ensures that the quality of the recovered carbon fibers is uniform and the catalyst can be reused through recycling. The operating cost of the process is reduced, and adverse effects on surface properties and mechanical properties of the fibers are avoided. Therefore, the present invention has the advantages of high efficiency, convenience, economy, good product quality, and the like, and has a broad market prospect.

The present invention innovatively provides a catalyst formula. Due to the existence of the catalyst, the resin matrix can be fully degraded, and residual impurities are cleared away. The cost required in the degradation process is lower; the process is simple; and scale-up production is easy. The recovered fiber has a complete microstructure and high performance retention rate, and the recovery effect can satisfy recycling conditions.

The catalyst for the thermal degradation of the carbon fiber reinforced polymer composites and the application method therefor provided in the embodiments of this application are described in detail above. The illustration of the above embodiments is only used to help understand the method of this application and the core idea of the method. Meanwhile, for those of ordinary skill in the art, according to the idea of this application, there will be changes in the specific implementation modes and the scope of application. Therefore, the content of this specification should not be construed as a limitation to this application.

For example, certain words are used in the specification and claims to refer to specific assemblies. Those skilled in the art should understand that hardware manufacturers may use different names to refer to the same assembly. This specification and claims do not use differences in names as a way to distinguish assemblies, but use differences in functions of assemblies as a criterion for distinguishing. If "including" or "comprising" mentioned in the entire specification and claims is an open term, it should be interpreted as "including/comprising but not limited to". "Approximately" means that within an acceptable error range, those skilled in the art can solve the technical problem within a certain error range and basically achieve the technical effect. The specification is subsequently described as a preferable implementation mode of this application, but this description is for the purpose of stating the general principles of this application and is not intended to limit the scope of this application. The protection scope of this application is subject to the definition of the appended claims.

It should be further noted that the terms "comprise", "include", or any other variation thereof are intended to cover a non-exclusive inclusion, so that an article or system that includes a list of elements includes those elements and further includes other elements not expressly listed or further includes elements inherent to such an article or system. Without more constraints, an element defined by "includes a..." does not preclude the existence of additional identical elements in the article or system that includes the element.

It should be understood that the term "and/or" herein is only an association relationship that describes associated objects, and represents that there can be three relationships. For example, A and/or B can represent that: A exists alone, A and B exist simultaneously, and B exists alone. In addition, the character "/" herein generally indicates that the front and back associated objects are in an "or" relationship.

The above description shows and describes several preferred embodiments of this application. However, as mentioned above, it should be understood that this application is not limited to the form disclosed herein and should not be regarded as the exclusion of other embodiments, but can be used for various other combinations, modifications, and environments. The application can be changed within the conceived scope of this application by means of the above teachings or technologies or knowledge in the related art. The modifications and changes made by those skilled in the art do not depart from the spirit and scope of this application, and shall all fall within the protection scope of the appended claims of this application.

## Claims

1. A method for using a catalyst for thermal degradation of carbon fiber reinforced polymer composites to catalyze degradation of carbon fiber reinforced polymer composites, the catalyst comprising a first component, a second component and a third component; the first component being potassium chloride or sodium chloride; the second component being zinc chloride or ferric chloride; and the third component being titanium dioxide or silicon oxide, wherein the method comprises the steps of:
S1, placing the catalyst in a pyrolysis furnace at a temperature maintained at 300°C to 500°C;
S2, cutting and placing the carbon fiber reinforced polymer composites into the pyrolysis furnace for reaction carried out for 10 to 30 min at a temperature maintained at 300°C to 500°C; and
S3, taking out a product, and ultrasonically washing the product with water to obtain recovered carbon fibers with high monofilament tensile strength and high strength retention rate,
wherein the resin matrix of the carbon fiber reinforced polymer is thermoset resin, which is one or more of epoxy resin, bismaleimide resin, unsaturated polyester or phenolic resin.

2. The method for using the catalyst to catalyze degradation of the carbon fiber reinforced polymer composites according to claim 1, **characterized in that** according to the standard ASTM-D3379, the monofilament tensile strength of the recovered carbon fibers is 4.45 GPa or above, and the strength retention rate is 90.8% or above.

3. The method for using the catalyst to catalyze degradation of the carbon fiber reinforced polymer composites according to claim 1, **characterized in that** the area of the cut carbon fiber reinforced polymer composites is 15-25 cm².

4. The method for using the catalyst to catalyze degradation of the carbon fiber reinforced polymer composites according to claim 1, **characterized in that** the thickness of the carbon fiber reinforced polymer composites in S2 is 2-3 mm.

5. The method for using the catalyst to catalyze degradation of the carbon fiber reinforced polymer composites according to claim 1, **characterized in that** the resin matrix in the carbon fiber reinforced polymer composites is thermoset resin, which is specifically one or more of epoxy resin, bismaleimide resin, unsaturated polyester, and phenolic resin.

6. The method for using the catalyst to catalyze degradation of the carbon fiber reinforced polymer composites according to claim 1, **characterized in that** the carbon fibers in the carbon fiber reinforced polymer composites are polyacrylonitrile (PAN)-based carbon fibers or asphalt-based carbon fibers.

7. The method for using the catalyst to catalyze degradation of the carbon fiber reinforced polymer composites according to claim 6, **characterized in that** the form of the carbon fibers in the carbon fiber reinforced polymer composites is any one or more of continuous fiber, chopped fiber, powder fiber, and fabric.

## Patentansprüche

1. Ein Verfahren zur Verwendung eines Katalysators für den thermischen Abbau von kohlenstoffaserverstärkten Polymerverbundwerkstoffen, um den Abbau von kohlenstoffaserverstärkten Polymerverbundwerkstoffen zu katalysieren, wobei der Katalysator eine erste Komponente, eine zweite Komponente und eine dritte Komponente umfasst; wobei die erste Komponente Kaliumchlorid oder Natriumchlorid ist; wobei die zweite Komponente Zinkchlorid oder Eisen(III)-chlorid ist; und die dritte Komponente Titandioxid oder Siliziumoxid ist, wobei das Verfahren die folgenden Schritte umfasst:
S1, Einbringen des Katalysators in einen Pyrolyseofen bei einer Temperatur, die bei 300 °C bis 500 °C gehalten wird;
S2, Schneiden und Einbringen der kohlenstoffaserverstärkten Polymerverbundstoffe in den Pyrolyseofen zur Reaktion, die für 10 bis 30 min bei einer Temperatur durchgeführt wird, die bei 300 °C bis 500 °C gehalten wird; und
S3, Herausnehmen eines Produkts und Waschen des Produkts mit Ultraschall mit Wasser, um wiedergewonnene Kohlenstofffasern mit hoher Monofilament-Zugfestigkeit und hoher Festigkeitsretentionsrate zu erhalten,
wobei die Harzmatrix des kohlenstofffaserverstärkten Polymers ein duroplastisches Harz ist, das eines oder mehrere aus Epoxidharz, Bismaleimidharz, ungesättigtem Polyester oder Phenolharz ist.

2. Das Verfahren zur Verwendung des Katalysators zur Katalyse des Abbaus der kohlenstoffaserverstärkten Polymerverbundstoffe gemäß Anspruch 1, **dadurch gekennzeichnet, dass** gemäß der Norm ASTM-D3379 die Monofilament-Zugfestigkeit der wiedergewonnenen Kohlenstoffasern 4,45 GPa oder mehr beträgt und die Festigkeitsretentionsrate 90,8 % oder mehr beträgt.

3. Das Verfahren zur Verwendung des Katalysators zur Katalyse des Abbaus der kohlenstoffaserverstärkten Polymerverbundstoffe gemäß Anspruch 1, **dadurch gekennzeichnet, dass** die Fläche der geschnittenen kohlenstoffaserverstärkten Polymerverbundstoffe 15-25 cm² beträgt.

4. Das Verfahren zur Verwendung des Katalysators zur Katalyse des Abbaus der kohlenstoffaserverstärkten Polymerverbundstoffe gemäß Anspruch 1, **dadurch gekennzeichnet, dass** die Dicke der kohlenstoffaserverstärkten Polymerverbundstoffe in S2 2-3 mm beträgt.

5. Das Verfahren zur Verwendung des Katalysators zur Katalyse des Abbaus der kohlenstoffaserverstärkten Polymerverbundstoffe gemäß Anspruch 1, **dadurch gekennzeichnet, dass** die Harzmatrix in den kohlenstoffaserverstärkten Polymerverbundstoffen ein Duroplastharz ist, das speziell eines oder mehrere aus Epoxidharz, Bismaleimidharz, ungesättigtem Polyester und Phenolharz ist.

6. Das Verfahren zur Verwendung des Katalysators zur Katalyse des Abbaus der kohlenstoffaserverstärkten Polymerverbundstoffe gemäß Anspruch 1, **dadurch gekennzeichnet, dass** die Kohlenstoffasern in den kohlenstoffaserverstärkten Polymerverbundstoffen Kohlenstoffasern auf Polyacrylnitril(PAN)-Basis oder Kohlenstoffasern auf Asphaltbasis sind.

7. Das Verfahren zur Verwendung des Katalysators zur Katalyse des Abbaus der kohlenstoffaserverstärkten Polymerverbundstoffe gemäß Anspruch 6, **dadurch gekennzeichnet, dass** die Form der Kohlenstoffasern in den kohlenstoffaserverstärkten Polymerverbundstoffen eine oder mehrere der folgenden ist: Endlosfaser, geschnittene Faser, Pulverfaser und Gewebe.

## Revendications

1. Procédé d'utilisation d'un catalyseur pour la dégradation thermique de composites polymères renforcés de fibres de carbone pour catalyser la dégradation de composites polymères renforcés de fibres de carbone, le catalyseur comprenant un premier composant, un deuxième composant et un troisième composant ; le premier composant étant du chlorure de potassium ou du chlorure de sodium ; le deuxième composant étant du chlorure de zinc ou du chlorure ferrique ; et le troisième composant étant du dioxyde de titane ou de l'oxyde de silicium, dans lequel le procédé comprend les étapes suivantes :
S1, placer le catalyseur dans un four de pyrolyse à une température maintenue entre 300°C et 500°C ;
S2, couper et placer les composites polymères renforcés de fibres de carbone dans le four à pyrolyse pour une réaction effectuée pendant 10 à 30 minutes à une température maintenue entre 300°C et 500°C ; et
S3, extraire un produit et laver de manière ultrasonique le produit avec de l'eau pour obtenir des fibres de carbone récupérées avec une résistance élevée à la traction monofilamentaire et un taux élevé de rétention de résistance,
dans lequel la matrice de résine du polymère renforcé de fibres de carbone est de la résine thermodurcissable, qui est une ou plusieurs des résine époxy, résine bismaléimide, polyester insaturé ou résine phénolique.

2. Procédé d'utilisation du catalyseur pour catalyser la dégradation des composites polymères renforcés de fibres de carbone selon la revendication 1, **caractérisé en ce que**, selon la norme ASTM-D3379, la résistance à la traction monofilament des fibres de carbone récupérées est supérieure ou égale à 4,45 GPa et que le taux de rétention de résistance est supérieur ou égal à 90,8 %.

3. Procédé d'utilisation du catalyseur pour catalyser la dégradation des composites polymères renforcés de fibres de carbone selon la revendication 1, **caractérisé en ce que** la surface des composites polymères renforcés de fibres de carbone coupés est de 15-25 cm².

4. Procédé d'utilisation du catalyseur pour catalyser la dégradation des composites polymères renforcés de fibres de carbone selon la revendication 1, **caractérisé en ce que** l'épaisseur des composites polymères renforcés de fibres de carbone en S2 est de 2-3 mm.

5. Procédé d'utilisation du catalyseur pour catalyser la dégradation des composites polymères renforcés de fibres de carbone selon la revendication 1, **caractérisé en ce que** la matrice de résine dans les composites polymères renforcés de fibres de carbone est de la résine thermodurcissable, qui est spécifiquement une ou plusieurs des résine époxy, résine bismaléimide, polyester insaturé, et résine phénolique.

6. Procédé d'utilisation du catalyseur pour catalyser la dégradation des composites polymères renforcés de fibres de carbone selon la revendication 1, **caractérisé en ce que** les fibres de carbone dans les composites polymères renforcés de fibres de carbone sont des fibres de carbone à base de polyacrylonitrile (PAN) ou des fibres de carbone à base d'asphalte.

7. Procédé d'utilisation du catalyseur pour catalyser la dégradation des composites polymères renforcés de fibres de carbone selon la revendication 6, **caractérisé en ce que** la forme des fibres de carbone dans les composites polymères renforcés de fibres de carbone est une quelconque ou plus de fibre continue, fibre hachée, fibre en poudre et tissu.
